# EUROPÄISCHE PATENTSCHRIFT

(11) **EP 1 035 919 B1**
(45) Veröffentlichungstag und Bekanntmachung des Hinweises auf die Patenterteilung: **24.07.2002**
(21) Anmeldenummer: 98963534.7
(22) Anmeldetag: 03.12.1998
(51) Int. Cl.: B01L 3/00

(54) **VORRICHTUNG ZUM KAPILLAREN FLÜSSIGKEITSTRANSPORT**
DEVICE FOR THE CAPILLARY TRANSPORT OF LIQUID
DISPOSITIF POUR LE TRANSPORT CAPILLAIRE DE LIQUIDE

(30) Priorität: 04.12.1997 DE 19753851
(43) Veröffentlichungstag der Anmeldung: 20.09.2000
(73) Patentinhaber: Roche Diagnostics GmbH, 68305 Mannheim (DE)
(72) Erfinder: LEICHNER, Wilhelm, D-68307 Mannheim (DE); SCHWÖBEL, Wolfgang, D-68309 Mannheim (DE); ZIMMER, Volker, D-69221 Dossenheim (DE)
(86) Internationale Anmeldenummer: EP9807852
(87) Internationale Veröffentlichungsnummer: WO9929427

(56) Entgegenhaltungen:
- EP-A- 0 348 006
- EP-A- 0 487 068
- DE-A- 19 629 656
- US-A- 3 715 192
- US-A- 5 192 502
- US-A- 5 503 803

## Beschreibung

Die Erfindung betrifft eine Vorrichtung zum kapillaren Transport einer Flüssigkeit zwischen zwei sich gegenüberliegenden, im wesentlichen planaren Schichten, wobei die beiden Schichten so in einem Abstand parallel zueinander angeordnet sind, daß ein kapillaraktiver Spalt zwischen beiden Schichten besteht, nach den Ausprüchen 1 oder 3.

Zur qualitativen oder quantitativen analytischen Bestimmung von Bestandteilen von Körperflüssigkeiten, insbesondere von Blut, werden oft sogenannte trägergebundene Tests verwendet. Bei diesen sind Reagenzien in entsprechenden Schichten eines festen Trägers eingebettet, der mit der Probe in Kontakt gebracht wird. Die Reaktion von flüssiger Probe und Reagenzien führt bei Anwesenheit eines Zielanalyten zu einem nachweisbaren Signal, insbesondere einem Farbumschlag, welcher visuell oder mit Hilfe eines Geräts, meist reflexionsphotometrisch, ausgewertet werden kann.

Testelemente oder Testträger sind häufig als Teststreifen ausgebildet, die im wesentlichen aus einer länglichen Tragschicht aus Kunststoffmaterial und darauf angebrachten Nachweisschichten als Testfeldern bestehen. Es sind jedoch auch Testträger bekannt, die als quadratische oder rechteckige Plättchen gestaltet sind.

Visuell oder reflexionsphotometrisch auszuwertende Testelemente für die klinische Diagnostik sind wie auch elektrochemische Sensoren und Biosensoren häufig so aufgebaut, daß die Probenauftragszone und die Detektionszone in einer vertikalen Achse übereinander angeordnet liegen. Diese Konstruktionsweise birgt eine Reihe von Problemen. Wenn der probenbeladene Teststreifen zur Vermessung in ein Gerät, beispielsweise ein Reflexionsphotometer, eingebracht werden muß, kann potentiell infektiöses Probenmaterial mit Geräteteilen in Berührung kommen und diese gegebenenfalls kontaminieren. Desweiteren ist, vor allem in den Fällen, in denen die Teststreifen von ungeschulten Personen benutzt werden, beispielsweise bei der Blutzuckerselbstkontrolle von Diabetikern, eine Volumendosierung nur schwer zu realisieren.

Seit kurzem sind Testelemente erhältlich, die einen kapillaren Kanal oder Spalt bereitstellen, mit Hilfe dessen sich zumindest ein Teil der beschriebenen Probleme lösen lassen.

EP-A-0 287 883 beschreibt ein Testelement, das für die Volumendosierung einen kapillaren Zwirschenraum zwischen Nachweisschicht und einem inerten Träger nutzt. Zur Befüllung des kapillaren Raumes wird das Testelement in die zu untersuchende Probe getaucht, was große Probenvolumina erforderlich macht, weshalb diese Form der Volumendosierung bevorzugt für die Untersuchung von im Überschuß vorhandenenem Probenmaterial, beispielsweise Urin, ge-eignet ist. Eine räumliche Trennung von Probenaufgabeort und Detektionsort findet nicht statt.

EP-B-0 034 049 beschäftigt sich mit einem Testelement, bei dem die Probe auf eine zentrale Probenaufgabestelle, beispielsweise eine Öffnung in einer Abdeckung, aufgegeben wird und mittels Kapillarkraft an mehrere räumlich von der Probenaufgabestelle getrennte Detektionszonen transportiert wird. Durch die zentrale Lage der Probenaufgabestelle ist mit einem Testelement gemäß EP-B-0 034 049 das Problem der Gerätehygiene, wie es oben beschrieben wurde, nicht gelöst.

Bei den beschriebenen Kapillarspalt-Testelementen wird der kapillare Spalt jeweils von durchgehenden, einteiligen Schichten gebildet. Insbesondere für den Fall, daß der kapillare Transport über nicht vernachlässigbare Strecken, beipielsweise über mehr als 10 mm, erfolgen soll, insbesondere um das Problem der Gerätehygiene in den Griff zu bekommen, wäre es wünschenswert, daß zumindest eine Schicht aus mehreren, nebeneinander liegenden Teilen aus unterschiedlichen Materialien gebildet werden könnte. Die unterschiedlichen Materialien könnten dann für Zonen mit unterschiedlichen Aufgaben eingesetzt werden, beipielsweise für Transportzonen, Reservoirzonen und/oder Reaktionszonen. Durch den Einsatz unterschiedlicher Materialien wäre dann eine gezielte Optimierung der Materialeigenschaften im Hinblick auf den erwünschten Zweck möglich. Problematisch ist dabei, daß bereits geringe Veränderungen in der für den Kapillareffekt verantwortlichen Dimension des Spaltes oder Kanals dazu führen, daß die Kapillarität schlagartig abbricht. Dazu reichen schon Querschnittserweiterungen im Mikrometerbereich. Die Erhaltung des kapillaren Schlusses an der Stelle, an der die unterschiedlichen Zonen aneinandergrenzen, ist ein Problem, das nach Kenntnis der Anmelderin bis heute nicht befriedigend gelöst ist.

Die Aufgabe der vorliegenden Erfindung bestand deshalb darin, die Nachteile des Standes der Technik zu beseitigen.

Dies wird durch den Gegenstand der Erfindung, wie er in den Patentansprüchen charakterisiert ist, erreicht.

Gegenstand der Erfindung ist eine Vorrichtung zum kapillaren Transport einer Flüssigkeit zwischen zwei einander gegenüberliegenden, im wesentlichen planaren Schichten, wobei die beiden Schichten so in einem Abstand parallel zueinander angeordnet sind, daß ein kapillaraktiver Spalt zwischen beiden Schichten besteht, mit den Kennzeichnenden Merkmalen von Anspruch 1 oder 3. Die sich gegenüberliegenden planaren Schichten sind vorzugsweise hydrophil ausgestattet.

Hydrophile Oberflächen sind in diesem Zusammenhang wasseranziehende Flächen. Wäßrige Proben, darunter auch Blut, spreiten auf solchen Oberflächen gut. Solche Flächen sind unter anderem dadurch charakterisiert, daß an der Grenzfläche ein Wassertropfen auf ihnen einen spitzen Rand- oder Kontaktwinkel ausbildet. Im Gegensatz dazu wird auf hydrophoben, das heißt wasserabweisenden Oberflächen, an der Grenzfläche zwischen Wassertropfen und Oberfläche ein stumpfer Randwinkel ausgebildet.

Der Randwinkel als Resultat der Oberflächenspannungen der Prüfflüsigkeit und der zu untersuchenden Oberfläche ist als Maß für die Hydrophilie einer Oberfläche geeignet. Wasser hat beispielsweise eine Oberflächenspannung von 72 mN/m. Liegt der Wert der Oberflächenspannung der betrachteten Fläche weit, d. h. mehr als 20 mN/M, unter diesem Wert, so ist die Benetzung schlecht und der resultierende Randwinkel ist stumpf. Eine solche Fläche wird als hydrophob bezeichnet. Nähert sich die Oberflächenspannung dem Wert, der für Wasser gefunden wird, so ist die Benetzung gut und der Randwinkel wird spitz. Wird die Oberflächenspannung dagegen gleich oder größer dem für Wasser gefundenen Wert, so zerläuft der Tropfen und es findet Totalspreitung der Flüssigkeit statt. Ein Randwinkel ist dann nicht mehr zu messen. Flächen, die mit Wassertropfen einen spitzen Randwinkel bilden oder bei denen Totalspreitung eines Wassertropfens beobachtet wird, werden als hydrophil bezeichnet.

Die Bereitschaft einer Kapillare, eine Flüssigkeit aufzusaugen, geht mit der Benetzbarkeit der Kanaloberfläche mit der Flüssigkeit einher. Für wäßrige Proben bedeutet dies, daß eine Kapillare aus einem Material gefertigt werden sollte, dessen Oberflächenspannung nahe an 72 mN/m heranreicht oder diesen Wert übertrifft.

Ausreichend hydrophile Materialien zum Aufbau einer Kapillare, die schnell wäßrige Proben aufsaugt, sind beispielsweise Glas, Metall oder Keramik. Für den Einsatz in Testträgern sind diese Materialien jedoch ungeeignet, da sie einige gravierende Nachteile aufweisen, beispielsweise Bruchgefahr bei Glas oder Keramik, oder Veränderung der Oberflächeneigenschaften mit der Zeit bei zahlreichen Metallen. Üblicherweise werden deshalb zur Fertigung von Testelementen Kunstoffolien oder -formteile eingesetzt. Die verwendeten Kunststoffe übertreffen dabei in der Regel kaum eine Oberflächenspannung von 45 mN/m. Selbst mit den, relativ betrachtet, hydrophilsten Kunststoffen wie beipielsweise Polymethylmethacrylat (PMMA) oder Polyamid (PA) lassen sich - wenn überhaupt - nur sehr langsam saugende Kapillaren aufbauen. Kapillaren aus hydrophoben Kunststoffen wie beispielsweise Polystyrol (PS), Polypropylen (PP) oder Polyethylen (PE) saugen im wesentlichen keine wäßrigen Proben. Hieraus ergibt sich die Notwendigkeit, Kunststoffe für die Verwendung als Konstruktionsmaterial für Testelemente mit kapillaraktiven Kanälen hydrophil auszustatten, das heißt zu hydrophilieren.

In einer bevorzugten Ausführungsform des erfindungsgemäßen analytischen Testelements ist zumindest eine, besser jedoch zwei, ganz besonders bevorzugt zwei sich gegenüberliegende Flächen der die innere Oberfläche des zum kapillaren Flüssigkeitstransports befähigten Kanals bildenden Flächen, hydrophiliert. Wird mehr als eine Fläche hydrophiliert, so können die Flächen entweder mit der gleichen oder mit unterschiedlichen Methoden hydrophil gemacht werden. Die Hydrophilierung ist vor allem dann notwendig, wenn die Materialien, die den kapillaraktiven Kanal bilden, insbesondere der Träger, selbst hydrophob oder nur sehr wenig hydrophil sind, beispielsweise weil sie aus unpolaren Kunststoffen bestehen. Unpolare Kunststoffe, wie zum Beispiel Polystyrol (PS), Polyethylen (PE), Polyethylenterephthalat (PET) oder Polyvinylchlorid (PVC), sind von Vorteil als Trägermaterialien, weil sie die zu untersuchenden Flüssigkeiten nicht absorbieren und damit das Probenvolumen effektiv von der Nachweisschicht genutzt werden kann. Durch die Hydrophilierung der Oberfläche des Kapillarkanals wird erreicht, daß eine polare, bevorzugt wäßrige Probenflüssigkeit bereitwillig in den kapillaren Kanal eintritt und dort rasch zum Nachweiselement bzw. zu der Stelle des Nachweiselements, an der die Detektion stattfindet, transportiert wird.

Idealerweise wird die Hydrophilierung der Oberfläche des kapillaren Kanals dadurch erreicht, daß zu seiner Fertigung ein hydrophiles Material eingesetzt wird, das jedoch die Probenflüssigkeit selbst nicht oder nicht wesentlich aufzusaugen vermag. Wo dies nicht möglich ist, kann die Hydrophilierung einer hydrophoben oder nur sehr wenig hydrophilen Oberfläche durch geeignete Beschichtung mit einer stabilen, gegenüber dem Probenmaterial inerten, hydrophilen Schicht erreicht werden, beispielsweise durch kovalente Bindung von photoreaktiv ausgerüsteten, hydrophilen Polymeren auf eine Kunststoffoberfläche, durch Aufbringen netzmittelhaltiger Schichten oder durch Beschichtung von Oberflächen mit Nanokompositen mittels Sol-Gel-Technologie. Darüberhinaus ist es möglich, durch thermische, physikalische oder chemische Behandlung der Oberfläche eine gesteigerte Hydrophilie zu erzielen.

Ganz besonders bevorzugt wird die Hydrophilierung durch die Verwendung von dünnen Schichten oxidierten Aluminiums erreicht. Diese Schichten werden entweder direkt auf die gewünschten Bauteile des Testelements aufgebracht, beispielsweise durch Vakuumbedampfen der Werkstücke mit metallischem Aluminium und anschließende Oxidation des Metalls, oder in Form von Metallfolien oder metallbeschichteten Kunststoffolien für den Testträgeraufbau verwendet, die ebenfalls zur Erzielung der erwünscheten Hydrophilie oxidiert werden müssen.

Metallschichtdicken von 1 bis 500 nm sind dabei ausreichend. Die Metallschicht wird anschließend zu Bildung der oxidierten Form oxidiert, wobei sich neben der elektrochemischen, anodischen Oxidation vor allem die Oxidation in Gegenwart von Wasserdampf oder durch Kochen in Wasser als besonders geeignete Methoden herausgestellt haben. Die so erzielten Oxidschichten sind je nach Methode zwischen 0,1 und 500 nm, bevorzugt zwischen 10 und 100 nm dick. Größere Schichtdicken sowohl der Metallschicht als auch der Oxidschicht sind zwar prinzipiell praktisch realisierbar, zeigen aber keine weiteren vorteilhaften Wirkungen.

Die nebeneinander liegenden Teile der erfindungsgemäßen Vorrichtung, die zusammen eine Schicht bilden, sind bevorzugt aus unterschiedlichen Materialien gefertigt und dienen zudem unterschiedlichen Zwecken. Beispielsweise kann ein Teil aus einer der Flüssigkeit gegenüber inerten Kunststoffolie gefertigt sein, während der zweite und gegebenenfalls weitere Teile aus Materialien gefertigt sind, die in charakteristischer Weise mit der Probenflüssigkeit wechselwirken können. Soll die erfindungsgemäße Vorrichtung zum Beispiel zur visuellen oder photometrischen Bestimmung eines Analyten in einer flüssigen Probe verwendet werden, kann ein Teil der besagten Schicht als Nachweiselement ausgestaltet sein, das alle für eine spezifische Nachweisreaktion erforderlichen Reagenzien und Hilfsstoffe enthalten kann. Solche Nachweiselemente sind dem Fachmann bekannt und müssen hier nicht näher erläutert werden. Bevorzugt besteht das Nachweiselement aus einer Folie, die auf der dem Kanal zugewandten Seite mit den erforderlichen Reagenzien und Hilfsmitteln beschichtet sind.

Die Montage der beiden nebeneinander liegenden Teile einer Schicht hat so zu erfolgen, daß sie in der fertigen Vorrichtung Stoß an Stoß nebeneinander zu liegen kommen, so daß der Flüssigkeitstransport in der Kapillare an der gemeinsamen Begrenzung der Teile nicht unterbrochen wird, beispielsweise durch ungünstige Veränderung des Kapillarenquerschnitts, worunter auch die Unterbrechung einer geschlossenen Begrenzungsfläche der Kapillare verstanden wird. Die besagten Teile sind diesem Zweck entsprechend in ihren Dimensionen aneinander anzupassen.

Um die Unterbrechung des kapillaren Flüssigkeitstransports im Kapillarkanal zu vermeiden hat wird auf der zum kapillaren Flüssigkeitstransport befähigten Kanal hin zugewandten Seite eines Teils der Schicht, die aus zumindest zwei Teilen besteht, eine dünne, flexible, inerte Folie einer Dicke von weniger als 5 µm angebracht ist, die über die gesamte Länge des besagten Teils reicht, den kapillaren Kanal auf der gesamten Breite bedeckt und die teilweise den benachbarten Teil der Schicht auf der zum kapillaren Flüssigkeitstransport befähigten Kanal hin zugewandten Seite bedeckt. Die Folienschicht überdeckt dabei die Verbindungszone der beiden Teile und ermöglicht dadurch, daß der kapillare Schluß an dieser empfindlichen Stelle erhalten bleibt. Die Folie, die im weiteren auch als Spaltabdeckfolie bezeichnet wird, kann vom Material und gegebenenfalls ihrer hydrophilierenden Beschichtung her weitgehend dem entsprechen, was weiter oben für die anderen Bestandteile der erfindungsgemäßen Vorrichtung bereits beschrieben wurde. Da die Folie einen Teil der Schicht nur teilweise bedeckt, tritt an der Stelle, an der die Folie endet, bedingt durch die Dicke der Folie eine Veränderung des Kapillarenquerschnitts auf. Damit diese Querschnittsveränderung nicht zum Abreißen des kapillaren Flusses führt, darf die Folie eine bestimmte Dicke nicht überschreiten. Als maximal zulässige Dicke hat sich eine Foliendicke von weniger als 5 µm herausgestellt. Besonders bevorzugt wird eine Dicke von unter 1 µm.

Solch dünne Folien sind schwierig zu handhaben, beipielsweise, weil sie leicht reißen, schwer zu beschichten sind, und verknittern, und bereiten deshalb bei der Fertigung gewisse Schwierigkeiten, die zu höheren Produktionskosten führen. Die Verwendung dickerer Folien mit Foliendicken zwischen 5 und 20 µm wird aus diesem Grund angestrebt. Überraschenderweise wurde gefunden, daß für eine andere Ausführungsform der erfindungsgemäßen Vorrichtung auf der dem zum kapillaren Flüssigkeitstransport befähigten Kanal hin zugewandten Seite eines Teils der mehrteiligen Schicht eine flexible, inerte Folie angebracht werden kann, die über die gesamte Länge des besagten Teils reicht, den kapillaren Kanal auf der gesamten Breite bedeckt und die zumindest teilweise zwischen den sich gegenüberliegenden Flächen der nebeneinanderliegenden Teile eingeschlossen ist, so daß der kapillare Flüssigkeitstransport an der gemeinsamen Begrenzung der Teile nicht abreißt. Die Folie kann vom Material und gegebenenfalls ihrer hydrophilierenden Beschichtung her weitgehend dem entsprechen, was weiter oben bereits für die anderen Bestandteile der erfindungsgemäßen Vorrichtung beschrieben wurde. Da bei dieser besonders bevorzugten Variante des Erfindungsgegenstandes kein Überlappen der Folie mit dem Teil der Schicht stattfindet, der dem folienbeschichteten Teil benachbart ist, führt die Verwendung der Spaltabdeckfolie nicht zwingend zu einer Querschnittsveränderung des Kapillarkanals. Deshalb können hier Folien mit größeren Dicken eingesetzt werden. Als bevorzugt haben sich Dicken von 5 bis 20 µm, insbesondere von 5 bis 15 µm herausgestellt.

Die Erfindung wird durch die Figuren 1 bis 3 und die nachfolgenden Beispiele näher erläutert.
Figur 1 zeigt schematisch einen Querschnitt durch eine Vorrichtung (nicht unter die Ansprüche 1 oder 3 fallend).
Figur 2 zeigt schematisch einen Querschnitt durch eine Ausführungsform der erfindungsgemäßen Vorrichtung.
Figur 3 zeigt schematisch einen Querschnitt durch eine Ausführungsform der erfindungsgemäßen Vorrichtung.

Die Ziffern in den Figuren bedeuten:
- 1: Trägerschicht
- 2: Abdeckschicht 1
- 3: Abdeckschicht 2
- 4: Probenaufgabeöffnung
- 5: Entlüftungsöffnung
- 6: kapillarer Kanal
- 7: Spaltabdeckfolie

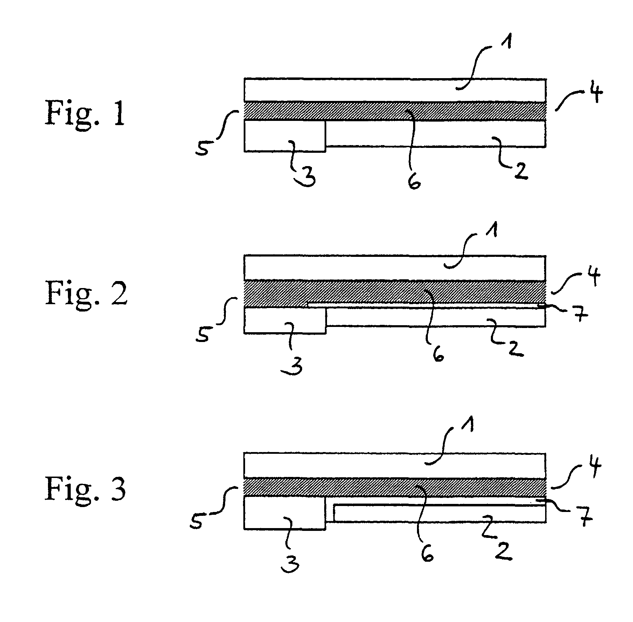

In Figur 1 ist eine Vorrichtung schematisch in Querschnittsansicht dargestellt. Die Vorrichtung besteht aus einer Trägerschicht (1), die so geformt ist, daß sie dort, wo sie mit den Abdeckschichten 1 (2) und 2 (3) bedeckt ist, zusammen mit diesen einen kapillaren Kanal (6) bildet. Beispielsweise kann zur Bildung des kapillaren Kanals (6) eine Vertiefung in die Trägerschicht (1) oder in die beiden Abdeckschichten 1 (2) und 2 (3) geprägt oder gefräst sein. Bei Verwendung planarer Schichten (1, 2, 3) kann der Kapillarkanal (6) auch durch eine Zwischenschicht (nicht gezeigt) geformt werden.

Die Zwischenschicht kann aus einem doppelseitig klebenden Band gefertigt sein, das neben der Bestimmung der Kapillarkanalgeometrie ebenfalls das Verbinden der übrigen, an der Bildung der kapillaraktiven Zone (6) beteiligten Komponenten Trägerschicht (1), Abdeckschicht 1(2) und 2 (3) zum Zweck hat. Die Zwischenschicht besitzt im Bereich des kapillaren Kanals (6) eine Aussparung, die Länge und Breite des Kanals (6) bestimmt. Seine Höhe ist durch die Dicke der Zwischenschicht vorgegeben.

In der gezeigten Ausführungsform ist auf der einen Seite des kapillaren Kanals (6) eine Probenaufgabeöffnung (4) vorgesehen. Auf der der Probenaufgabeöffnung (4) gegenüberliegenden Seite des kapillaren Kanals (6) befindet sich eine Entlüftungsöffnung (5), die das Entweichen von Luft bei der Befüllung des Kapillarkanals (6) mit Probenflüssigkeit erlaubt.

Die Kapillarzone (6) reicht von der Probenaufgabeöffnung (4) bis zum entgegengesetzten Ende der zweiten Abdeckschicht (3). Probenaufgabeöffnung (4) und Entlüftungsöffnung (5) begrenzen den kapillaraktiven Bereich (6) in Richtung des kapillaren Transports.

Abdeckschicht 1 (2) und 2 (3) sind so Stoß an Stoß nebeneinander montiert, daß der kapillare Kanal (6) ununterbrochen von der Probenaufgabeöffnung (4) bis zur Entlüftungsöffnung (5) reicht.

In Figur 2 und 3 wird schematisch anhand von Querschnittsansichten gezeigt, wie durch die Verwendung einer Spaltabdeckfolie (7) das Abreißen des kapillaraktiven Bereichs (6) an der Berührungsstelle von Abdeckschicht 1 (2) und 2 (3) zuverlässig vermieden werden kann. Die Spaltabdeckfolie (7) kann zudem auf der dem Kapillarkanal (6) zugewandten Seite mit einer hydrophilen Oberfläche ausgestattet sein, die für den kapillaren Transport eines Probenflüssigkeitstropfens von der Probenaufgabeöffnung (4) zur Entlüftungsöffnung (5) förderlich ist.

In Figur 2 bedeckt die Spaltabdeckfolie (7) die Abdeckschicht 1 (2) auf ihrer gesamten Länge und überlappt auch noch teilweise die Abdeckschicht 2 (3), was dort zu einer Veränderung des Querschnitts der kapillaraktiven Zone (6) führt.

In Figur 3 ist dargestellt, wie als Alternative zu der in Figur 2 schematisch dargestellen Ausführungsform die Spaltabdeckfolie (7) für kapillaren Schluß zwischen Abdeckschicht 1 (2) und 2 (3) sorgen kann. In der gezeigten ganz besonders bevorzugen Ausführungsform ist die Spaltabdeckfolie (7) zwischen Abdeckschicht 1 (2) und 2 (3) eingeschlossen und überlappt so nicht mit der Abdeckschicht 2 (3).

### Beispiel 1

### Herstellung der erfindungsgemäßen Vorrichtung

Auf eine mit einer 30 nm dicken Schicht aus Aluminium, das mit Wasserdampf vollständig oxidiert wurde, beschichtete, 350 µm dicke Folie aus Polyethylenterephthalat (Melinex®, ICI, Frankfurt am Main, Deutschland) wird ein doppelseitiges Klebeband der Dicke 100 µm geklebt. Die Folie hat eine Länge von 25 mm und ist 5 mm breit. An einer der kurzen Seiten befindet sich eine zentrale, kerbenförmige Aussparung von 1 mm Breite und 2 mm Länge. Das Klebeband besitzt eine Ausstanzung von 2 mm Breite und mehr als 15 mm Länge, die die Dimensionen des Kapillarkanals definieren. Die Länge der Ausstanzung ist geringfügig größer zu wählen als die gewünschte Länge des kapillaraktiven Kanals, die durch dessen Abdeckung bestimmt wird, um eine Entlüftung des Kanals während des Befüllens mit Probenflüssigkeit zu gewährleisten. Auf das Klebeband wird auf der Seite, an der die Entlüftung vorgesehen ist, in 1 mm Abstand vom Ende der Ausstanzung ein 3 mm langer und 5 mm breiter Nachweisfilm geklebt. Als Nachweisfilm wird ein Film verwendet, wie er aus der deutschen Patentanmeldung DE-A-196 29 656.0 bekannt ist. Der Nachweisfilm ist spezifisch für den Nachweis von Glucose. Auf den noch offen liegenden Bereich des Klebebandes zwischen kerbenförmiger Aussparung und Nachweisfilm wird eine 12 mm lange und 5 mm breite Abdeckschicht aufgeklebt, so daß Abdeckschicht und Nachweisfilm Stoß an Stoß zu liegen kommen. Die Abdeckschicht besteht aus einer 150 µm dicken, einseitig mit Klebstoff versehenen Polyethylenterephthalat-Folie, auf die auf der zum Kapillarkanal hingewandten Seite eine mit oxidiertem Aluminium der Dicke 30 nm beschichtete, 6 µm dicke Polyethylenterephthalat-Folie geklebt ist ( beide: Hostaphan®, Hoechst, Frankfurt am Main, Deutschland). Die dünnere Folie steht dabei an der zum Nachweisfilm gewandten Seite ca. 500 µm über die dickere Folie über. Bei der Montage der Abdeckschicht auf das Klebeband ist darauf zu achten, daß das überstehende Ende der dünneren Folie zwischen dem Nachweiselement und der dickeren Folie der Abdeckschicht zu liegen kommt. Um noch frei liegende Klebebandbereiche abzudecken werden diese mit einer 175 µm dicken Melinex®-Folie abgedeckt, ohne dabei jedoch funktionale Bereiche abzudecken.

Das so erhaltene Testelement hat eine kapillaren Kanal von 15 mm Länge, 2 mm Breite und 0,1 mm Höhe. Der Kanal kann 3 µl Probenflüssigkeit aufnehmen. Der Nachweisfilm wird auf einer Fläche von 3 mm × 2 mm von der Probe benetzt.

### Beispiel 2

### Messung der Blutglukosekonzentration mit Hilfe des Testelements aus Beispiel 1

Das Testelement aus Beispiel 1 wird mit der Probenaufgabeseite auf einen Probenflüssigkeitstropfen aufgesetzt. Die Kapillare des Testelements füllt sich innerhalb von 2 s selbständig mit Probe. Ist Glucose in der Probe vorhanden wird nach wenigen Sekunden eine Farbentwicklung im Nachweisfilm sichtbar. Nach ca. 30 bis 35 s ist der Endpunkt der Reaktion erreicht. Die erhaltene Farbe kann mit der Glucosekonzentration der Probe korreliert werden und wird entweder visuell oder reflexionsfotometrisch ausgewertet.

## Patentansprüche

1. Vorrichtung zum kapillaren Transport einer Flüssigkeit zwischen zwei einanden gegenüberliegenden, im wesentlichen planaren Schichten, wobei die beiden Schichten so in einem Abstand parallel zueinander angeordnet sind, daß ein kapillaraktiver Spalt (6) zwischen beiden Schichten besteht, **dadurch gekennzeichnet, daß** zumindest eine der beiden Schichten mindestens zwei diskrete, nebeneinanderliegende Teile (2, 3) enthält. wobei auf der zum kapillaren Flüssigkeitstransport befähigten Kanal hin zugewandten Seite eines Teils der Schicht, die aus zumindest zwei Teilen besteht, eine flexible. inerte Folie (7) einer Dicke von weniger als 5 µm angebracht ist, die über die gesamte Länge des besagten Teils reicht, den kapillaren Kanal auf der gesamten Breite bedeckt und die teilweise den benachbarten Teil der Schicht auf der zum kapillaren Flüssigkeitstransport befähigten Kanal hin zugewandten Seite bedeckt.

2. Vorrichtung gemäß Anspruch 1, **dadurch gekennzeichnet, daß** die beiden nebeneinanderliegenden Teile (2, 3) einer Schicht aus unterschiedlichen Materialien bestehen.

3. Vorrichtung zum kapillaren Transport einer Flüssigkeit zwischen zwei einander gegenüberliegenden, im wesentlichen planaren Schichten, wobei die beiden Schichten so in einem Abstand parallel zueinander angeordnet sind, daß ein kapillaraktiver Spalt (6) zwischen beiden Schichten besteht, **dadurch gekennzeichnet, daß** zumindest eine der beiden Schichten mindestens zwei diskrete, nebeneinanderliegende Teile (2, 3) enthält. wobei auf der zum kapillaren Flüssigkeitstransport befähigten Kanal hin zugewandten Seite eines Teils der Schicht, die aus zumindest zwei Teilen besteht, eine flexible. inerte Folie (7) angebracht ist, die über die gesamte Länge des besagten Teils reicht, den kapillaren Kanal auf der gesamten Breite bedeckt und die zumindest teilweise zwischen den einander gegenüberliegenden Flächen der beiden Teile der besagten Schicht eingeschlossen ist.

4. Vorrichtung gemäß Anspruch 3, **dadurch gekennzeichnet, daß** die beiden nebeneinanderliegenden Teile (2, 3) einer Schicht aus unterschiedlichen Materialien bestehen.

5. Vorrichtung gemäß Anspruch 3 oder 4. **dadurch gekennzeichnet, daß** die Folie (7) eine Dicke von einschließlich 5 bis einschließlich 20 um besitzt.

6. Vorrichtung gemäß einem der Ansprüche 1 bis 5, **dadurch gekennzeichnet, daß** die flexible, inerte Folie (7) auf der dem Kapillarspalt (6) zugewandten Oberfläche hydrophiliert ist.

7. Vorrichtung gemäß Anspruch 6. **dadurch gekennzeichnet, daß** zur Hydrophilierung eine Schicht aus oxidiertem Aluminium verwendet wird.

## Claims

1. Device for the capillary transport of a liquid between two opposite, essentially planar layers, in which the two layers are arranged parallel to one another at such a distance that there is a capillary-active gap (6) between the two layers, wherein at least one of the two layers contains at least two discrete adjacent parts (2, 3) and a flexible inner foil (7) of less than 5 µm thickness is attached to the side facing the channel capable of capillary liquid transport of one part of the layer, which is composed of at least two parts, and said foil extends over the entire length of the said part, covers the capillary channel over its entire width and partially covers the neighbouring part of the layer on the side facing the channel capable of capillary liquid transport.

2. Device as claimed in claim 1, wherein the two adjacent parts (2, 3) of a layer are composed of different materials.

3. Device for the capillary transport of a liquid between two opposite, essentially planar layers, in which the two layers are arranged parallel to one another at such a distance that there is a capillary-active gap (6) between the two layers, wherein at least one of the two layers contains at least two discrete adjacent parts (2, 3) and a flexible inert foil (7) is attached to the side facing the channel capable of capillary liquid transport of one part of the layer, which is composed of at least two parts, and said foil extends over the entire length of the said part, covers the capillary channel over its entire width and is at least partially enclosed between the two opposite surfaces of the two parts of the said layer.

4. Device as claimed in claim 3, wherein the two adjacent parts (2, 3) of a layer are composed of different materials.

5. Device as claimed in claim 3 or 4, wherein the foil (7) has a thickness of 5 to 20 µm inclusive.

6. Device as claimed in one of the claims 1 to 5, wherein the flexible, inert foil (7) is hydrophilized on the surface facing the capillary gap (6).

7. Device as claimed in claim 6, wherein a layer of oxidized aluminium is used for the hydrophilization.

## Revendications

1. Dispositif pour le transport capillaire d'un liquide entre deux couches essentiellement planes et opposées l'une à l'autre, les deux couches étant disposées parallèlement l'une à l'autre à une distance telle que l'on obtient une fente à activité capillaire (6) entre les deux couches, **caractérisé en ce qu'**au moins une des deux couches contient au moins deux parties discrètes (2, 3) disposées l'une à côté de l'autre, dans lequel, sur le côté d'une partie de la couche, qui est constituée par au moins deux parties, tourné en direction du canal apte au transport capillaire de liquide, on applique une feuille inerte flexible (7) dont l'épaisseur est inférieure à 5 µm, qui s'étend sur toute la longueur de la partie en question, qui recouvre le canal capillaire sur toute sa largeur et qui recouvre partiellement la partie voisine de la couche sur le côté tourné vers le canal apte au transport capillaire de liquide.

2. Dispositif selon la revendication 1, **caractérisé en ce que** les deux parties (2, 3) d'une couche, disposées l'une à côté de l'autre, sont constituées par des matériaux différents.

3. Dispositif pour le transport capillaire d'un liquide entre deux couches essentiellement planes et opposées l'une à l'autre, les deux couches étant disposées parallèlement l'une à l'autre à une distance telle que l'on obtient une fente à activité capillaire (6) entre les deux couches, **caractérisé en ce qu'**au moins une des deux couches contient au moins deux parties discrètes (2, 3) disposées l'une à côté de l'autre, dans lequel, sur le côté d'une partie de la couche, qui est constituée par au moins deux parties, tourné en direction du canal apte au transport capillaire de liquide, on applique une feuille inerte flexible (7) qui s'étend sur toute la longueur de la partie en question, qui recouvre le canal capillaire sur toute sa largeur et qui est insérée, au moins en partie, entre les surfaces opposées l'une à l'autre des deux parties de la couche en question.

4. Dispositif selon la revendication 3, **caractérisé en ce que** les deux parties (2, 3) d'une couche, disposées l'une à côté de l'autre, sont constituées par des matériaux différents.

5. Dispositif selon la revendication 3 ou 4, **caractérisé en ce que** la feuille (7) possède une épaisseur de 5 µm inclus à 20 µm inclus.

6. Dispositif selon l'une quelconque des revendications 1 à 5, **caractérisé en ce que** la feuille inerte flexible (7) a été rendue hydrophile sur la surface tournée vers la fente capillaire (6).

7. Dispositif selon la revendication 6, **caractérisé en ce qu'**on utilise, pour obtenir le caractère hydrophile, une couche d'aluminium oxydé.
